(19) **Europäisches Patentamt**
**European Patent Office**
**Office européen des brevets**

(11) **EP 4 160 346 B1**

(12) **EUROPEAN PATENT SPECIFICATION**

(45) Date of publication and mention
of the grant of the patent:
**18.09.2024  Bulletin 2024/38**

(51) International Patent Classification (IPC):
**G06V 20/58** (2022.01)     **B60W 60/00** (2020.01)
**G01S 13/86** (2006.01)     **G08G 1/16** (2006.01)

(21) Application number: **20940942.4**

(22) Date of filing: **16.06.2020**

(52) Cooperative Patent Classification (CPC):
**G06V 20/588; G01S 7/4808; G01S 17/89;
G01S 17/931; G06V 20/58; G08G 1/166;
G08G 1/167**

(86) International application number:
**PCT/CN2020/096415**

(87) International publication number:
**WO 2021/253245 (23.12.2021 Gazette 2021/51)**

(54) **METHOD AND DEVICE FOR IDENTIFYING VEHICLE LANE CHANGING TENDENCY**

VERFAHREN UND VORRICHTUNG ZUR ERKENNUNG EINER SPURWECHSELTENDENZ EINES
FAHRZEUGS

PROCÉDÉ ET DISPOSITIF D'IDENTIFICATION DE TENDANCE AU CHANGEMENT DE VOIE D'UN
VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.04.2023  Bulletin 2023/14**

(73) Proprietor: **Huawei Technologies Co., Ltd.
Shenzhen, Guangdong 518129 (CN)**

(72) Inventors:
• **CHEN, Hao
  Shenzhen, Guangdong 518129 (CN)**
• **LU, Hao
  Shenzhen, Guangdong 518129 (CN)**
• **GAO, Chen
  Shenzhen, Guangdong 518129 (CN)**

(74) Representative: **Gill Jennings & Every LLP
The Broadgate Tower
20 Primrose Street
London EC2A 2ES (GB)**

(56) References cited:
| | |
|---|---|
| WO-A1-2007/051835 | CN-A- 101 089 917 |
| CN-A- 103 196 418 | CN-A- 106 598 053 |
| CN-A- 106 627 585 | CN-A- 106 647 776 |
| CN-A- 107 038 896 | CN-A- 107 121 980 |
| CN-A- 108 961 799 | CN-A- 108 961 839 |
| CN-A- 110 097 785 | CN-A- 110 949 395 |
| CN-A- 111 222 417 | FR-B1- 3 029 154 |
| US-A1- 2002 091 479 | US-A1- 2009 067 675 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This application relates to the field of self-driving technologies, and in particular, to a method and an apparatus for recognizing a vehicle lane change trend.

### BACKGROUND

At present, traffic accidents caused by vehicle lane changes are very common in urban roads. Therefore, for self-driving, it is also very important to accurately recognize a lane change trend of a vehicle around a current vehicle.

In some self-driving vehicles, when a lane change trend of a surrounding target vehicle is determined, a laser radar technology is usually used to obtain laser point cloud data of a surrounding scene, detect a contour vertex of the target vehicle, and obtain a transverse distance between the contour vertex and the current vehicle. Further, the lane change trend of the target vehicle is determined based on a change of the transverse distance with time.

In addition, in some self-driving vehicles, when a lane change trend of a surrounding target vehicle is determined, a machine vision technology is used to obtain a surrounding scene image, detect a lane line in which the current vehicle is located and the target vehicle in the scene image, and obtain a distance between the target vehicle and the lane line in which the current vehicle is located. Further, the lane change trend of the target vehicle is determined based on a change of the distance with time.

In a process of implementing this application, the inventor finds that the related technology has at least the following problems:

When the lane change trend of the target vehicle is recognized by using the laser radar technology, contour vertex detection of the target vehicle is inaccurate due to exhaust gas of the target vehicle, dust, and the like. As a result, the lane change trend of the target vehicle is inaccurately determined. When the lane change trend of the target vehicle is recognized by using the machine vision technology, there may be no lane line in an intersection area. Consequently, the lane change trend of the target vehicle cannot be recognized. US 2009/067675 A1 discloses a radar-guided vision system for detecting the presence of a target vehicle in front of a host vehicle in the same lane of traffic and for determining whether the target vehicle intends to change lanes. CN 101089917 A discloses a method for identifying a lane-changing condition of an object vehicle.

### SUMMARY

Embodiments of this application provide a method and an apparatus for recognizing a vehicle lane change trend, to resolve a problem in a related technology that a vehicle lane change trend cannot be accurately recognized by using only a laser radar technology or a machine vision technology. Technical solutions are as follows:

According to a first aspect, a method for recognizing a vehicle lane change trend is defined in the appended claim 1.

According to a second aspect, an apparatus for recognizing a vehicle lane change trend is defined in the appended claim 10.

According to a third aspect, a computer-readable storage medium is provided. The storage medium stores at least one instruction, and the instruction is loaded and executed by a processor to implement operations performed by using the method for recognizing the vehicle lane change trend according to the first aspect.

### BRIEF DESCRIPTION OF DRAWINGS

FIG. 1 is a schematic diagram of a structure of a device for recognizing a vehicle lane change trend according to an embodiment of this application;

FIG. 2 is a flowchart of a method for recognizing a vehicle lane change trend according to an embodiment of this application;

FIG. 3 is a schematic diagram of an image coordinate system of a scene image according to an embodiment of this application;

FIG. 4 is a schematic diagram of an image coordinate system of a scene image according to an embodiment of this application; and

FIG. 5 is a schematic diagram of a structure of an apparatus for recognizing a vehicle lane change trend according to an embodiment of this application.

**DESCRIPTION OF EMBODIMENTS**

An embodiment of this application provides a method for recognizing a vehicle lane change trend. The method may be applied to a self-driving vehicle. The method may be implemented by a device for recognizing a vehicle lane change trend in the self-driving vehicle. A sensing system, a positioning system, and the like may be deployed in the self-driving vehicle. The sensing system may include a laser radar, a camera, and the like. The positioning system may be a global positioning system (Global Positioning System, GPS), a BeiDou system, or the like.

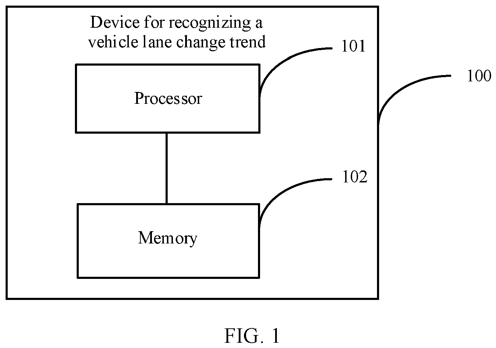

FIG. 1 is a schematic diagram of a device 100 for recognizing a vehicle lane change trend according to an embodiment of this application. In FIG. 1, the device for recognizing a vehicle lane change trend may include a processor 101 and a memory 102. The processor 101 may be a central processing unit (Central Processing Unit, CPU). The processor 101 may be one processor, or may include a plurality of processors. The memory 102 may include a volatile memory, for example, a random access memory (random access memory, RAM). Alternatively, the memory may include a nonvolatile memory, for example, a read-only memory (read-only memory, ROM) or a flash memory. The memory may alternatively include a combination of the foregoing types of memories. The memory 102 may be one memory or may include a plurality of memories. The memory 102 stores a computer-readable instruction, and the computer-readable instruction may be executed by the processor 101, to implement the method for recognizing a vehicle lane change trend provided in the embodiments of this application.

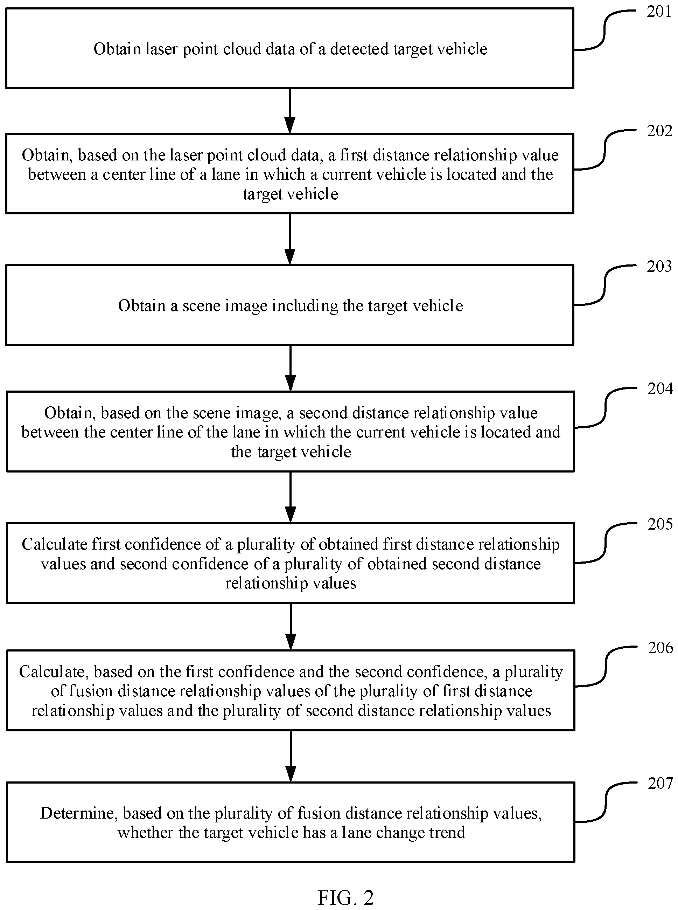

FIG. 2 is a flowchart of a method for recognizing a vehicle lane change trend according to an embodiment of this application. A procedure of the method includes the following steps.

Step 201: Obtain laser point cloud data of a detected target vehicle.

The target vehicle is a vehicle traveling in a scene around a current vehicle.

In implementation, a laser radar may be installed on the current vehicle, and the laser radar scans the surrounding scene at a fixed frequency to obtain laser point cloud data. When the laser point cloud data of the detected target vehicle is obtained, the laser point cloud data of the detected target vehicle may not be obtained in each frame. Instead, the laser point cloud data of the detected target vehicle is obtained based on a detection period. In one detection period, the laser radar may collect one or more frames of laser point cloud data of the detected target vehicle. In each detection period, a last frame of laser point cloud data that is of the detected target vehicle and that is obtained in the current detection period may be obtained.

Step 202: Obtain, based on the laser point cloud data, a first distance relationship value between a center line of a lane in which the current vehicle is located and the target vehicle.

In implementation, for the obtained laser point cloud data, the target vehicle may be recognized, and coordinates of a laser point corresponding to a contour line vertex of the target vehicle in a laser radar coordinate system are obtained. Then, the coordinates of the contour line vertex of the target vehicle in the laser radar coordinate system are converted into coordinates of the contour line vertex of the target vehicle in a self-vehicle coordinate system based on a transformation matrix from the laser radar coordinate system obtained through pre-calibration to the self-vehicle coordinate system, to obtain first coordinates of the target vehicle in the self-vehicle coordinate system. The obtained coordinates of the target vehicle in the laser radar coordinate system may be the coordinates of the contour line vertex of the target vehicle in the laser radar coordinate system. Correspondingly, the converted first coordinates in the self-vehicle coordinate system may include coordinates of the contour line vertex of the target vehicle in the self-vehicle coordinate system. Herein, different shapes of the target vehicle may accordingly correspond to different quantities of contour line vertices.

Then, the first coordinates of the target vehicle in the self-vehicle coordinate system may be converted into coordinates of the target vehicle in a world coordinate system, to obtain second coordinates of the target vehicle in the world coordinate system. In other words, coordinates of each contour line vertex of the target vehicle in the self-vehicle coordinate system are converted into coordinates of the contour line vertex of the target vehicle in the world coordinate system. A method for converting the coordinates of each contour line vertex of the target vehicle from the self-vehicle coordinate system to the world coordinate system may be as follows:

Timestamp alignment is performed on the laser radar and a positioning system. Coordinates $(x_0, y_0)$ and an orientation angle $\theta_0$ of the current vehicle in the world coordinate system are obtained by using the positioning system. Then, the first coordinates of the target vehicle in the self-vehicle coordinate system are converted according to the following formula (1):

$$[x_i', \ y_i', \ 1]^T = T_v^w [x_i, \ y_i, \ 1]^T \quad (1)$$

$x_i, y_i$ is a horizontal coordinate and a vertical coordinate of the $i$th contour line vertex of the target vehicle in the self-vehicle coordinate system of the current vehicle, and $x_i', y_i'$ is a horizontal coordinate and a vertical coordinate of the $i^{th}$ contour line vertex of the target vehicle in the world coordinate system. $T_v^w$ is a rotation matrix from the self-vehicle coordinate system to the world coordinate system, and the rotation matrix may be represented as follows:

$$T_v^w = \begin{bmatrix} \cos\theta_0 & -\sin\theta_0 & x_0 \\ \sin\theta_0 & \cos\theta_0 & y_0 \\ 0 & 0 & 1 \end{bmatrix}$$

After the second coordinates of the target vehicle in the world coordinate system are obtained, a center line point set of the lane in which the current vehicle is located may be obtained from a high-definition map. Herein, the obtained center line point set may be a center line point set that meets a preset distance condition from the current vehicle, for example, a center line point set of the lane in which the current vehicle is located within a range of 100 meters of the current vehicle.

Then, distances between the second coordinates of the target vehicle in the world coordinate system and coordinates of sampling points in the obtained center line point set of the lane in which the current vehicle is located on the high-definition map may be calculated, and a minimum distance is selected as the distance between the target vehicle and the center line of the lane in which the current vehicle is located. In other words, distances between the coordinates of the contour line vertices of the target vehicle in the world coordinate system and the coordinates of the sampling points in the obtained center line point set of the lane in which the current vehicle is located on the high-definition map are calculated, and a minimum distance is selected as the distance between the target vehicle and the center line of the lane in which the current vehicle is located. Herein, the distance between the target vehicle and the center line of the lane in which the current vehicle is located may be denoted as $d_1$.

Then, a ratio of the distance $d_1$ between the target vehicle and the center line of the lane in which the current vehicle is located to a width $D_1$ of the lane in which the current vehicle is located may be calculated, and the ratio is used as the first distance relationship value $\gamma_l$ between the target vehicle and the center line of the lane in which the

$$\gamma_l = \frac{d_1}{D_1}$$

current vehicle is located. That is, . Herein, the width $D_1$ of the lane in which the current vehicle is located may be obtained by using the high-definition map.

In addition, it should be further noted that a distance relationship value is used to indicate a distance relationship between another vehicle and the center line of the lane in which the current vehicle is located. In addition to a ratio of a distance between the another vehicle and the center line of the lane in which the current vehicle is located to the width of the lane in which the current vehicle is located, the distance relationship value may also be represented by a reciprocal of the ratio.

Step 203: Obtain a scene image including the target vehicle.

In implementation, a machine vision device, such as a camera, may be installed on the current vehicle. The machine vision device photographs a surrounding scene at a fixed frequency to obtain the scene image. When the scene image including the target vehicle is obtained, each frame of scene image including the target vehicle may not be obtained, but the laser point cloud data including the target vehicle is obtained based on the detection period. In one detection period, the machine vision device may obtain one or more frames of scene images including the target vehicle. In a detection period, a last frame of scene image that includes the target vehicle and that is obtained in the current detection period may be obtained.

Step 204: Obtain, based on the scene image, a second distance relationship value between the center line of the lane in which the current vehicle is located and the target vehicle.

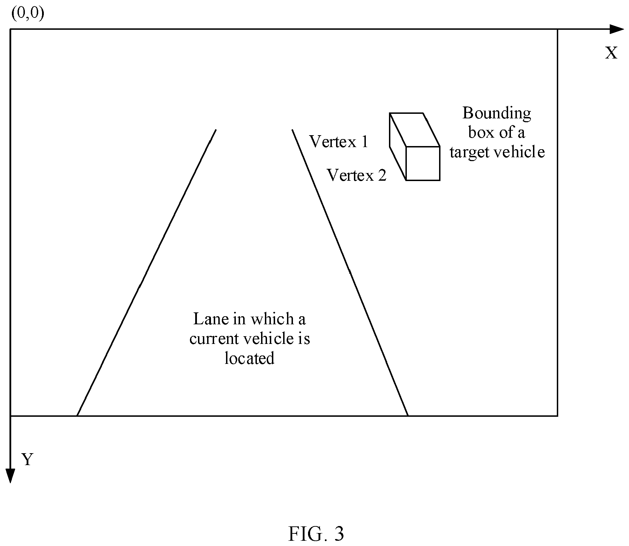

In implementation, lane line recognition and target vehicle recognition may be performed on the obtained scene image including the target vehicle. When target vehicle recognition is performed, a bounding box (bounding box) corresponding to the target vehicle may be generated, and coordinates of two vertices that are in the bounding box of the target vehicle and that are close to the current vehicle and in contact with the ground in an image coordinate system are obtained. As shown in FIG. 3, the image coordinate system may use an upper left corner of the image as an origin. Coordinates of a vertex 1 that is in the bounding box of the target vehicle and that is close to the current vehicle and in contact with the ground may be denoted as $(x_{v1}, y_{v1})$. Coordinates of a vertex 2 that is in the bounding box of the target vehicle and that is close to the current vehicle and in contact with the ground may be denoted as $(x_{v2}, y_{v2})$.

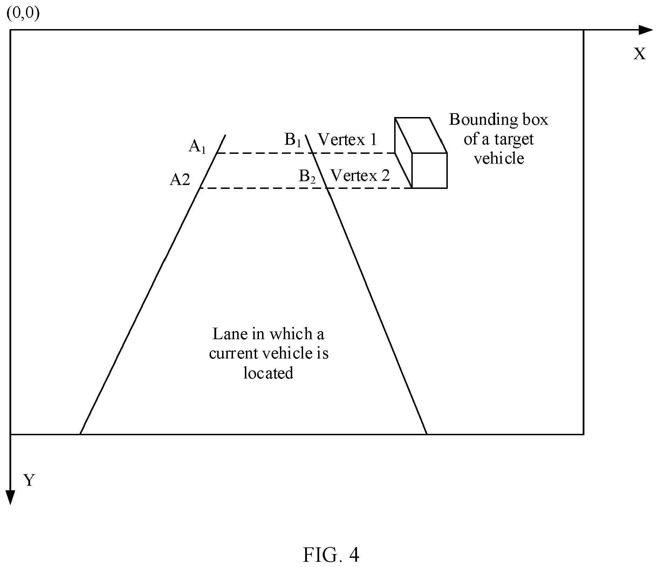

In the image coordinate system shown in FIG. 3, a point $A_1$ that is on a left lane line of the lane in which the current vehicle is located and that has a same vertical coordinate as the vertex 1 and a point $B_1$ that is on a right lane line and that has a same vertical coordinate as the vertex 1 are separately obtained. Coordinates of $A_1$ are $(x_{l1}, y_{v1})$, and coordinates of $B_1$ are $(x_{r1}, y_{v1})$. Similarly, a point $A_2$ that is on the left lane line of the lane in which the current vehicle is located and that has a same vertical coordinate as the vertex 2 and a point $B_2$ that is on the lane line and that has a same vertical coordinate as the vertex 2 are obtained. Coordinates of $A_2$ are $(x_{l2}, y_{v2})$, and coordinates of $B_2$ are $(x_{l2}, y_{v2})$. A location relationship among the vertex 1, $A_1$, $B_1$, the vertex 2, $A_2$, and $B_2$ may be shown in FIG. 4. An image coordinate system shown in FIG. 4 is the same as the image coordinate system shown in FIG. 3. For the vertex 1 and the vertex 2, distance relationship values between the corresponding vertices and the center line of the lane in which the current vehicle is located may be separately calculated, and a smaller value obtained through calculation is used as the second distance relationship value between the target vehicle and the center line of the lane in which the current vehicle is located.

A distance relationship value between the vertex 1 and the center line of the lane in which the current vehicle is located may be calculated as follows:

First, a point $C_1$ that is on the center line of the lane and that corresponds to the vertex 1 is obtained, coordinates of $C_1$ are $(x_{c1}, y_{v1})$, and $x_{c1}$ may be calculated according to the following formula (2):

$$x_{c1} = \frac{x_{r1} + x_{l1}}{2} \quad (2)$$

Then, the distance relationship value between the vertex 1 and the center line of the lane in which the current vehicle is located may be calculated. A calculation method may be the following formula (3):

$$\gamma_{v1} = \frac{|x_{v1} - x_{c1}|}{|x_{r1} - x_{l1}|} \quad (3)$$

A distance relationship value between the vertex 2 and the center line of the lane in which the current vehicle is located may be calculated as follows:

First, a point $C_2$ that is on the center line of the lane and that corresponds to the vertex 2 is obtained, coordinates of $C_2$ are $(x_{c2}, y_{v2})$, and $x_{c2}$ may be calculated according to the following formula (4):

$$x_{c2} = \frac{x_{r2} + x_{l2}}{2} \quad (4)$$

Then, the distance relationship value between the vertex 2 and the center line of the lane in which the current vehicle is located may be calculated. A calculation method may be the following formula (5):

$$\gamma_{v2} = \frac{|x_{v2} - x_{c2}|}{|x_{r2} - x_{l2}|} \quad (5)$$

Finally, a smaller value between $\gamma_{v1}$ and $\gamma_{v2}$ is used as the second distance relationship value between the target vehicle and the center line of the lane in which the current vehicle is located.

Step 205: Calculate first confidence of a plurality of obtained first distance relationship values and second confidence of a plurality of obtained second distance relationship values.

In implementation, when the plurality of first distance relationship values and the plurality of second distance relationship values are obtained, the first confidence of the first distance relationship values and the second confidence of the second distance relationship values may be calculated. When the first distance relationship values and the second distance relationship values are obtained based on same detection periods, the confidence of the first distance relationship values and the confidence of the second distance relationship values may be calculated after M detection periods, and the confidence of the first distance relationship values and the confidence of the second distance relationship values may be recalculated in each subsequent detection period. M is a preset positive integer, and may be set according to an actual requirement, for example, may be set to 10, 15, or the like.

When the first confidence of the plurality of obtained first distance relationship values and the second confidence of the plurality of obtained second distance relationship values are calculated, an ideal lane change model and an ideal lane keep model may be used for calculation. The ideal lane change model is used to represent a time-varying relationship of a distance relationship value between another vehicle in the scene around the current vehicle and the center line of the lane in which the current vehicle is located when the another vehicle changes a lane. The ideal lane keep model is used to represent a time-varying relationship of a distance relationship value between the another vehicle and the center line of the lane in which the current vehicle is located when the another vehicle moves along the lane. The following describes a method for calculating, based on the ideal lane change model and the ideal lane keep model, the first confidence of the plurality of obtained first distance relationship values and the second confidence of the plurality of obtained second distance relationship values.

First, a first available lane change model and a first available lane keep model are obtained based on the plurality of obtained first distance relationship values, the ideal lane change model, and the ideal lane keep model. A second available lane change model and a second available lane keep model are obtained based on the plurality of obtained second distance relationship values, the ideal lane change model, and the ideal lane keep model.

It should be noted that the plurality of obtained first distance relationship values and the plurality of obtained second distance relationship values may be first distance relationship values and second distance relationship values obtained in a first preset quantity of consecutive detection periods including a current detection period. The first preset quantity may be set according to an actual requirement. For example, the first preset quantity may be the same as a value of M, and is set to 10, 15, or the like.

A method for obtaining the second available lane change model is the same as a method for obtaining the first available lane change model, and a method for obtaining the second available lane keep model is the same as a method for obtaining the first available lane keep model. The following uses the method for obtaining the first available lane change model and the method for obtaining the first available lane keep model as examples for description.

The ideal lane change model may be represented by the following relational expression (6):

$$q_{LC}(x_i) = \alpha_1 \left( 1 - \frac{1}{1 + e^{-\alpha_2 x_i + \alpha_3}} \right) \quad (6)$$

$q_{LC}(x_i)$ is a predicted distance relationship value. $\alpha_1$, $\alpha_2$ and $\alpha_3$ are to-be-determined unknown parameters.

The ideal lane keep model may be represented by the following relational expression (7):

$$q_{LK}(x_i) = \alpha_4 \quad (7)$$

$\alpha_4$ is a to-be-determined unknown parameter, and $q_{LK}(x_i)$ is a predicted distance relationship value.

For a method for calculating the to-be-determined unknown parameters $\alpha_1$, $\alpha_2$ and $\alpha_3$ in the ideal lane change model based on the plurality of obtained first distance relationship values, the calculation method may be the following formula (8):

$$(\alpha_1, \ \alpha_2, \ \alpha_3) = arg\min f(\alpha_1, \ \alpha_2, \ \alpha_3) := \sum_{i=1}^{N} p(x_i) \cdot (\log p(x_i) - \log q_{LC}(x_i)) \quad (8)$$

N is a quantity of obtained first distance relationship values, and $x_i$ may be a sorting value corresponding to the $i^{th}$ obtained first distance relationship value in the plurality of obtained first distance relationship values. For example, $x_1$ is a sorting value corresponding to the first obtained first distance relationship value in the plurality of obtained first distance relationship values, $x_1 = 1$, and so on. $p(x_i)$ is the $i^{th}$ obtained first distance relationship value in the plurality of obtained first distance relationship values. The plurality of obtained first distance relationship values used to determine the to-be-determined unknown parameters in the ideal lane change model and sorting values respectively corresponding to the plurality of obtained first distance relationship values are substituted into the foregoing formula (8), and values of the unknown parameters $\alpha_1$, $\alpha_2$, and $\alpha_3$ are adjusted. When an accumulation result of the foregoing formula (8) is the smallest, values of $\alpha_1$, $\alpha_2$, and $\alpha_3$ are obtained, for example, $\alpha_1 = \alpha_1$, $\alpha_2 = \alpha_2$, and $\alpha_3 = \alpha_3$, and $\alpha_1$, $\alpha_2$, and $\alpha_3$ are substituted into the foregoing formula (6), to obtain the first available lane change model, as shown in the following formula (9):

$$q_{LC1}(x_i) = a_1 \left( 1 - \frac{1}{1 + e^{-a_2 x_i + a_3}} \right) \quad (9)$$

For a method for determining the to-be-determined unknown parameter $\alpha_4$ in the ideal lane keep model based on the plurality of first distance relationship values, the method may be the following formula (10):

$$\alpha_4 = arg\min f(\alpha_4) := \sum_{i=1}^{N} p(x_i) \cdot \left(\log p(x_i) - \log q_{LK}(x_i)\right) \quad (10)$$

The plurality of obtained first distance relationship values and the sorting values respectively corresponding to the plurality of first distance relationship values are substituted into the foregoing formula (10), and a value of the unknown parameter $\alpha_4$ is adjusted. When an accumulation result of the foregoing formula (10) is the smallest, a value of $\alpha_4$ is obtained, for example, $\alpha_4 = \alpha_4$. The value of $\alpha_4$ is substituted into the foregoing formula (7), to obtain the first available lane keep model, as shown in the following formula (11):

$$q_{LK1}(x_i) = a_4 \quad (11)$$

Similarly, the second available lane change model and the second available lane keep model are obtained based on the plurality of obtained second distance relationship values, the ideal lane change model, and the ideal lane keep model. The second available lane change model may be obtained according to the following formula (12):

$$q_{LC2}(x_i) = b_1 \left(1 - \frac{1}{1 + e^{-b_2 x_i + b_3}}\right) \quad (12)$$

The second available lane keep model may be obtained according to the following formula (13):

$$q_{LK2}(x_i) = b_4 \quad (13)$$

Then, after the first available lane change model, the first lane keep model, the second available lane change model, and the second lane keep model are obtained, a first fitting degree of the plurality of obtained first distance relationship values to the first available lane change model and a second fitting degree of the plurality of obtained first distance relationship values to the first lane keep model may be separately calculated, and a third fitting degree of the plurality of obtained second distance relationship values to the second available lane change model and a fourth fitting degree of the plurality of obtained second distance relationship values to the second lane keep model may be calculated.
The first fitting degree of the plurality of obtained first distance relationship values to the first available lane change model may be calculated by using the following formula (14):

$$D_{LC1} = \sum_{i=1}^{N} p(x_i) \cdot \left(\log p(x_i) - \log q_{LC1}(x_i)\right) \quad (14)$$

The second fitting degree of the plurality of obtained first distance relationship values to the first available lane keep model may be calculated by using the following formula (15):

$$D_{LK1} = \sum_{i=1}^{N} p(x_i) \cdot \left(\log p(x_i) - \log q_{LK1}(x_i)\right) \quad (15)$$

The third fitting degree of the plurality of obtained second distance relationship values to the second available lane change model may be calculated by using the following formula (16):

$$D_{LC2} = \sum_{i=1}^{N} p(x_i) \cdot \left(\log p(x_i) - \log q_{LC2}(x_i)\right) \quad (16)$$

The fourth fitting degree of the plurality of obtained second distance relationship values to the second available lane keep model may be calculated by using the following formula (17):

$$D_{LK2} = \sum_{i=1}^{N} p(x_i) \cdot (\log p(x_i) - \log q_{LK2}(x_i)) \quad (17)$$

Finally, a reciprocal of a smaller value between the first fitting degree and the second fitting degree is calculated, and is used as the first confidence $T_1$ of the obtained first distance relationship values. A reciprocal of a smaller value between the third fitting degree and the fourth fitting degree is calculated, and is used as the first confidence $T_2$ of the obtained second distance relationship values.

Step 206: Calculate, based on the first confidence and the second confidence, a plurality of fusion distance relationship values of the plurality of first distance relationship values and the plurality of second distance relationship values.

In implementation, for the plurality of obtained first distance relationship values and the plurality of obtained second distance relationship values, a target first distance relationship value and a target second distance relationship value that are obtained in a same detection period may be obtained. A product of the target first distance relationship value and a first weight is added to a product of the target second distance relationship value and a second weight, to obtain a fusion distance relationship value corresponding to the detection period to which the target first distance relationship value and the target second relationship value belong. In this way, corresponding fusion distance values may be obtained for detection periods to which the plurality of obtained first distance relationship values and the plurality of obtained second distance relationship values belong.

The first weights $W_1$ corresponding to the plurality of obtained first distance relationship values may be calculated according to the following formula (18):

$$W_1 = \frac{T_1}{T_1 + T_2} \quad (18)$$

The second weights $W_2$ corresponding to the plurality of obtained second distance relationship values may be calculated according to the following formula (19):

$$W_2 = \frac{T_2}{T_1 + T_2} \quad (19)$$

Then, a target first distance relationship value and a target second distance relationship value that are obtained in a same detection period are sequentially obtained from the plurality of obtained first distance relationship values and the plurality of obtained second distance relationship values. A product of a target first distance relationship value $\gamma_{li}$ obtained in the ith detection period and a first weight $W_1$ is added to a product of a target second distance relationship value $\gamma_{vi}$ obtained in the ith detection period and a second weight $W_2$, to obtain a fusion distance relationship value $\gamma_{fi}$ corresponding to the ith detection period, where i is a detection period to which the currently obtained target first distance relationship value and the target second distance relationship value belong; and $\gamma_{fi}$ is a sorting value in each of the plurality of detection periods to which the plurality of obtained first distance relationship values and the plurality of obtained second distance relationship values belong.

A calculation formula may be the following formula (20):

$$\gamma_{fi} = W_1 \cdot \gamma_{li} + W_2 \cdot \gamma_{vi} \quad (20)$$

Step 207: Determine, based on the plurality of fusion distance relationship values, whether the target vehicle has a lane change trend.

In implementation, the fusion distance relationship value corresponding to each of the plurality of detection periods and the corresponding sorting value are substituted into the foregoing formula (8). A sorting value corresponding to the fusion distance value may be represented by a sorting value of a detection period in which the fusion distance value is obtained through calculation in the plurality of detection periods. The sorting value corresponding to the fusion distance value is substituted into $x_i$ in the foregoing formula (8), and the fusion distance relationship value is substituted into $p(x_i)$ in the foregoing formula (8). Values of the unknown parameters $\alpha_1$, $\alpha_2$, and $\alpha_3$ are adjusted. When an accumulation result of the foregoing formula (8) is the smallest, values of $\alpha_1$, $\alpha_2$, and $\alpha_3$ are obtained, for example, $\alpha_1 = b_1$, $\alpha_2 = b_2$, and $\alpha_3 = b_3$. The values of $\alpha_1$, $\alpha_2$, and $\alpha_3$ are substituted into the foregoing formula (6), to obtain a third available lane change model, as shown in the following formula (21):

$$q_{LC3}(x_i) = b_1 \left( 1 - \frac{1}{1 + e^{-b_2 x_i + b_3}} \right) \quad (21)$$

Then, a fitting degree of the fusion distance relationship values corresponding to the plurality of detection periods to the third available lane change model may be calculated. A calculation method may be the following formula (22). The sorting value corresponding to the fusion distance value is substituted into $x_i$ in the formula (22), and the fusion distance relationship value is substituted into $p(x_i)$ in the formula (22).

$$D_{LC3} = \sum_{i=1}^{N} p(x_i) \cdot \left( \log p(x_i) - \log q_{LC3}(x_i) \right) \quad (22)$$

N is a quantity of fusion distance values used to determine whether the target vehicle has a lane change trend.

Finally, it is determined whether the calculated fitting degree $D_{LC3}$ is greater than the preset fitting degree. If the calculated fitting degree $D_{LC3}$ is greater than the preset fitting degree, it may be determined that the target vehicle has the lane change trend.

In this embodiment of this application, the lane change trend of the target vehicle is comprehensively determined with reference to the laser point cloud data obtained by using the laser radar technology and the scene image obtained by using the machine vision technology. This can effectively avoid a problem of inaccurate recognition of the vehicle lane change trend that is caused by using only the laser radar technology or the machine vision technology.

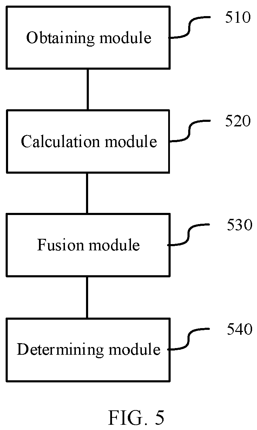

Based on a same technical concept, an embodiment of this application further provides an apparatus for recognizing a vehicle lane change trend, and the apparatus may be applied to a device for recognizing a vehicle lane change trend. As shown in FIG. 5, the apparatus for recognizing the vehicle lane change trend includes the following modules.

An obtaining module 510 is configured to: obtain laser point cloud data of a detected target vehicle, where the target vehicle is a vehicle traveling in a scene around the current vehicle; obtain, based on the laser point cloud data, a first distance relationship value between a center line of a lane in which the current vehicle is located and the target vehicle; obtain a scene image including the target vehicle; and obtain, based on the scene image, a second distance relationship value between the center line of the lane in which the current vehicle is located and the target vehicle. Specifically, the obtaining function in the foregoing steps 201 to 204 and other implicit steps may be implemented.

A calculation module 520 is configured to calculate first confidence of a plurality of obtained first distance relationship values and second confidence of a plurality of obtained second distance relationship values. Specifically, a calculation function in step 205 and other implicit steps may be implemented.

A fusion module 530 is configured to calculate a plurality of fusion distance relationship values of the plurality of first distance relationship values and the plurality of second distance relationship values based on the first confidence and the second confidence. Specifically, a fusion function in step 206 and other implicit steps may be implemented.

A determining module 540 is configured to determine, based on the plurality of fusion distance relationship values, whether the target vehicle has a lane change trend. Specifically, a determining function in step 207 and other implicit steps may be implemented.

In a possible implementation, the obtaining module 510 is configured to:

obtain, based on a high-definition map, a center line point set of the lane in which the current vehicle is located, where the center line point set includes coordinates of a plurality of sampling points on the center line of the lane in which the current vehicle is located in a world coordinate system; and
obtain, based on the laser point cloud data and the center line point set, the first distance relationship value between the center line of the lane in which the current vehicle is located and the target vehicle.

In a possible implementation, the obtaining module 510 is configured to:

obtain, based on the laser point cloud data, first coordinates of the target vehicle in a self-vehicle coordinate system of the current vehicle;
convert the first coordinates into second coordinates of the target vehicle in the world coordinate system;
use a minimum distance between the coordinates of the sampling points included in the center line point set in the world coordinate system and the second coordinate as a first distance between the center line of the lane in which the current vehicle is located and the target vehicle; and
obtain a width of the lane in which the current vehicle is located, calculate a first ratio of the first distance to the width of the lane line in which the current vehicle is located, and use the first ratio as the first distance relationship value between the center line of the lane in which the current vehicle is located and the target vehicle.

In a possible implementation, the obtaining module 510 is configured to:

calculate, in an image coordinate system of the scene image, a vertical distance between the target vehicle and the center line of the lane in which the current vehicle is located;
calculate a width of the lane in which the current vehicle is located in the image coordinate system of the scene image; and
calculate a second ratio of the vertical distance to the width of the lane in which the current vehicle is located in the image coordinate system of the scene image, and use the second ratio as the second distance relationship value between the center line of the lane in which the current vehicle is located and the target vehicle.

In a possible implementation, the calculation module 520 is configured to:
calculate, based on an ideal lane change model and an ideal lane keep model, the first confidence of the plurality of obtained first distance relationship values and the second confidence of the plurality of obtained second distance relationship values, where the ideal lane change model is used to represent a time-varying relationship of a distance relationship value between another vehicle in the scene around the current vehicle and the center line of the lane in which the current vehicle is located when the another vehicle changes a lane; and the ideal lane keep model is used to represent a time-varying relationship of a distance relationship value between the another vehicle and the center line of the lane in which the current vehicle is located when the another vehicle moves along the lane.

In a possible implementation, the calculation module 520 is configured to:

calculate a value of each unknown parameter in the ideal lane change model based on the plurality of obtained first distance relationship values, to obtain a first available lane change model;
calculate a value of each unknown parameter in the ideal lane keep model based on the plurality of obtained first distance relationship values, to obtain a first available lane keep model;
calculate a first fitting degree of the plurality of obtained first distance relationship values to the first available lane change model and a second fitting degree of the plurality of obtained first distance relationship values to the first available lane keep model;
obtain the first confidence of the plurality of obtained first distance relationship values based on the first fitting degree and the second fitting degree;
calculate a value of each unknown parameter in the ideal lane change model based on the plurality of obtained second distance relationship values, to obtain a second available lane change model;
calculate a value of each unknown parameter in the ideal lane keep model based on the plurality of obtained second distance relationship values, to obtain a second available lane keep model;
calculate a third fitting degree of the plurality of obtained second distance relationship values to the second available lane change model and a fourth fitting degree of the plurality of obtained second distance relationship values to the second available lane keep model; and
obtain the second confidence of the plurality of obtained second distance relationship values based on the third fitting degree and the fourth fitting degree.

In a possible implementation, the calculation module 520 is configured to:
determine a reciprocal of a smaller value between the first fitting degree and the second fitting degree as the first confidence of the plurality of obtained first distance relationship values.

Obtaining the second confidence of the plurality of obtained second distance relationship values based on the third fitting degree and the fourth fitting degree includes:
determining a reciprocal of a smaller value between the third fitting degree and the fourth fitting degree as the second confidence of the plurality of obtained second distance relationship values.

In a possible implementation, the obtaining module 510 is configured to:

obtain, based on a detection period and the laser point cloud data, the first distance relationship value between the center line of the lane in which the current vehicle is located and the target vehicle; and
obtain, based on the detection period and the scene image, the second distance relationship value between the center line of the lane in which the current vehicle is located and the target vehicle.

The fusion module 530 is configured to:

calculate, based on the first confidence and the second confidence, the first weight corresponding to the plurality of first distance relationship values and the second weight corresponding to the plurality of second distance relationship values;

obtain, from the plurality of first distance relationship values and the plurality of second distance relationship values, a target first distance relationship value and a target second distance relationship value that are obtained in a same detection period; and

add a product of the target first distance relationship value and the first weight to a product of the target second distance relationship value and the second weight, to obtain a fusion distance relationship value corresponding to the detection period to which the target first distance relationship value and the target second relationship value belong.

In a possible implementation, the determining module 540 is configured to:

calculate a value of each unknown parameter in the ideal lane change model based on a fusion distance relationship value corresponding to each of the plurality of detection periods, to obtain a third available lane change model;

calculate a fifth fitting degree of the fusion distance relationship values corresponding to the plurality of detection periods to the third available lane change model; and

if the fifth fitting degree is greater than a preset fitting degree threshold, determine that the target vehicle has a lane change trend.

It should be noted that, when the apparatus for recognizing the vehicle lane change trend provided in the foregoing embodiment recognizes the vehicle lane change trend, division of the foregoing functional modules is merely used as an example for description. In actual application, the foregoing functions may be allocated to different functional modules and implemented according to a requirement. In other words, an internal structure of the device for recognizing the vehicle lane change trend may be divided into different functional modules to implement all or some of the functions described above. In addition, the apparatus for recognizing a vehicle lane change trend provided in the foregoing embodiment and the method embodiment for recognizing a vehicle lane change trend belong to a same concept. For a specific implementation process, refer to the method embodiment. Details are not described herein again.

In the foregoing embodiment, all or part of the software, hardware, firmware, or any combination thereof may be implemented. When the software is used for implementation, all or part of the implementation may be implemented in a form of a computer program product. The computer program product includes one or more computer instructions. When the computer program instructions are loaded and executed on a device, the procedures or functions are all or partially generated according to embodiments of this application. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a device, or a data storage device, such as a server or a data center, integrating one or more usable media. The usable media may be a magnetic medium (for example, a floppy disk, a hard disk drive, a magnetic tape, or the like), an optical medium (for example, a digital video disk (Digital Video Disk, DVD), or the like), a semiconductor medium (for example, a solid-state drive, or the like).

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely embodiments of this application, but are not intended to limit this application. The scope of the invention is defined by the appended claims.

## Claims

1. A method for recognizing a vehicle lane change trend, the method comprising:

obtaining, in a plurality of consecutive detection periods, a plurality of obtained first distance relationship values and a plurality of obtained second distance relationship values,
wherein each first distance relationship value is obtained by, based on a respective detection period of said plurality of consecutive detection periods:

obtaining (201) laser point cloud data of a detected target vehicle, wherein the target vehicle is a vehicle traveling in a scene around the current vehicle;

obtaining (202), based on the laser point cloud data, a first distance relationship value between a center line of a lane in which the current vehicle is located and the target vehicle;

wherein each second distance relationship value is obtained by, based on a respective detection period of said plurality of consecutive detection periods:

obtaining a scene image (203) comprising the target vehicle;
obtaining (204), based on the scene image, a second distance relationship value between the center line of the lane in which the current vehicle is located and the target vehicle;
calculating (205) a first confidence of said plurality of obtained first distance relationship values and a second confidence of said plurality of obtained second distance relationship values;
calculating (206) a plurality of fusion distance relationship values of the plurality of first distance relationship values and the plurality of second distance relationship values based on the first confidence and the second confidence; and
determining (207), based on a time-varying relationship of the plurality of fusion distance relationship values, whether the target vehicle has a lane change trend.

2. The method according to claim 1, wherein the obtaining, based on the laser point cloud data, a first distance relationship value between a center line of a lane in which the current vehicle is located and the target vehicle comprises:

obtaining, based on a high-definition map, a center line point set of the lane in which the current vehicle is located, wherein the center line point set comprises coordinates of a plurality of sampling points on the center line of the lane in which the current vehicle is located in a world coordinate system; and
obtaining, based on the laser point cloud data and the center line point set, the first distance relationship value between the center line of the lane in which the current vehicle is located and the target vehicle.

3. The method according to claim 2, wherein the obtaining, based on the laser point cloud data and the center line point set, the first distance relationship value between the center line of the lane in which the current vehicle is located and the target vehicle comprises:

obtaining, based on the laser point cloud data, first coordinates of the target vehicle in a self-vehicle coordinate system of the current vehicle;
converting the first coordinates into second coordinates of the target vehicle in the world coordinate system;
using a minimum distance between the coordinates of the sampling points comprised in the center line point set in the world coordinate system and the second coordinates as a first distance between the center line of the lane in which the current vehicle is located and the target vehicle; and
obtaining a width of the lane in which the current vehicle is located, calculating a first ratio of the first distance to the width of the lane line in which the current vehicle is located, and using the first ratio as the first distance relationship value between the center line of the lane in which the current vehicle is located and the target vehicle.

4. The method according to any one of claims 1 to 3, wherein the obtaining, based on the scene image, a second distance relationship value between the center line of the lane in which the current vehicle is located and the target vehicle comprises:

calculating, in an image coordinate system of the scene image, a vertical distance between the target vehicle and the center line of the lane in which the current vehicle is located;
calculating a width of the lane in which the current vehicle is located in the image coordinate system of the scene image; and
calculating a second ratio of the width of the lane in which the current vehicle is located in the image coordinate system to the vertical distance, and using the second ratio as the second distance relationship value between the center line of the lane in which the current vehicle is located and the target vehicle.

5. The method according to any one of claims 1 to 4, wherein the calculating first confidence of a plurality of obtained first distance relationship values and second confidence of a plurality of obtained second distance relationship values comprises:
calculating, based on an ideal lane change model and an ideal lane keep model, the first confidence of the plurality of obtained first distance relationship values and the second confidence of the plurality of obtained second distance relationship values, wherein the ideal lane change model is used to represent a time-varying relationship of a distance relationship value between another vehicle in the scene around the current vehicle and the center line of the lane in which the current vehicle is located when the another vehicle changes a lane; and the ideal lane keep model is used to represent a time-varying relationship of a distance relationship value between the another vehicle and the center line of the lane in which the current vehicle is located when the another vehicle moves along the lane.

6.  The method according to claim 5, wherein the calculating, based on an ideal lane change model and an ideal lane keep model, the first confidence of the plurality of obtained first distance relationship values and the second confidence of the plurality of obtained second distance relationship values comprises:

    calculating a value of each unknown parameter in the ideal lane change model based on the plurality of obtained first distance relationship values, to obtain a first available lane change model;
    calculating a value of each unknown parameter in the ideal lane keep model based on the plurality of obtained first distance relationship values, to obtain a first available lane keep model;
    calculating a first fitting degree of the plurality of obtained first distance relationship values to the first available lane change model and a second fitting degree of the plurality of obtained first distance relationship values to the first available lane keep model;
    obtaining the first confidence of the plurality of obtained first distance relationship values based on the first fitting degree and the second fitting degree;
    calculating a value of each unknown parameter in the ideal lane change model based on the plurality of obtained second distance relationship values, to obtain a second available lane change model;
    calculating a value of each unknown parameter in the ideal lane keep model based on the plurality of obtained second distance relationship values, to obtain a second available lane keep model;
    calculating a third fitting degree of the plurality of obtained second distance relationship values to the second available lane change model and a fourth fitting degree of the plurality of obtained second distance relationship values to the second available lane keep model; and
    obtaining the second confidence of the plurality of obtained second distance relationship values based on the third fitting degree and the fourth fitting degree.

7.  The method according to claim 6, wherein the obtaining the first confidence of the plurality of obtained first distance relationship values based on the first fitting degree and the second fitting degree comprises:

    obtaining a reciprocal of a smaller value between the first fitting degree and the second fitting degree, and using the reciprocal as the first confidence of the plurality of obtained first distance relationship values; and
    the obtaining the second confidence of the plurality of obtained second distance relationship values based on the third fitting degree and the fourth fitting degree comprises:
    obtaining a reciprocal of a smaller value between the third fitting degree and the fourth fitting degree, and using the reciprocal as the second confidence of the plurality of obtained second distance relationship values.

8.  The method according to any one of claims 1 to 7, wherein the obtaining, based on the laser point cloud data, a first distance relationship value between a center line of a lane in which the current vehicle is located and the target vehicle comprises:

    obtaining, based on a detection period and the laser point cloud data, the first distance relationship value between the center line of the lane in which the current vehicle is located and the target vehicle;
    the obtaining, based on the scene image, a second distance relationship value between the center line of the lane in which the current vehicle is located and the target vehicle comprises:

    obtaining, based on the detection period and the scene image, the second distance relationship value between the center line of the lane in which the current vehicle is located and the target vehicle; and
    the calculating a plurality of fusion distance relationship values of the plurality of first distance relationship values and the plurality of second distance relationship values based on the first confidence and the second confidence comprises:

    calculating, based on the first confidence and the second confidence, a first weight corresponding to the plurality of first distance relationship values and a second weight corresponding to the plurality of second distance relationship values;
    obtaining, from the plurality of first distance relationship values and the plurality of second distance relationship values, a target first distance relationship value and a target second distance relationship value that are obtained in a same detection period; and

adding a product of the target first distance relationship value and the first weight to a product of the target second distance relationship value and the second weight, to obtain a fusion distance relationship value corresponding to the detection period to which the target first distance relationship value and the target second relationship value belong.

9. The method according to any one of claims 1 to 8, wherein the determining, based on the plurality of fusion distance relationship values, whether the target vehicle has a lane change trend comprises:

calculating a value of each unknown parameter in the ideal lane change model based on the plurality of fusion distance relationship values, to obtain a third available lane change model;

calculating a fifth fitting degree of the plurality of fusion distance relationship values to the third available lane change model; and

if the fifth fitting degree is greater than a preset fitting degree threshold, determining that the target vehicle has a lane change trend.

10. An apparatus for recognizing a vehicle lane change trend, wherein the apparatus comprises:
an obtaining module (510), configured to:

obtain, in a plurality of consecutive detection periods, a plurality of obtained first distance relationship values and a plurality of obtained second distance relationship values,

wherein each first distance relationship value is obtained by, based on a respective detection period of said plurality of consecutive detection periods:

obtaining laser point cloud data of a detected target vehicle, wherein the target vehicle is a vehicle traveling in a scene around the current vehicle; obtaining, based on the laser point cloud data, a first distance relationship value between a center line of a lane in which the current vehicle is located and the target vehicle, and

wherein each second distance relationship value is obtained by, based on a respective detection period of said plurality of consecutive detection periods:

obtaining a scene image comprising the target vehicle; and obtaining, based on the scene image, a second distance relationship value between the center line of the lane in which the current vehicle is located and the target vehicle;

a calculation module (520), configured to calculate a first confidence of a plurality of said obtained first distance relationship values and a second confidence of said plurality of obtained second distance relationship values;

a fusion module (530), configured to calculate a plurality of fusion distance relationship values of the plurality of first distance relationship values and the plurality of second distance relationship values based on the first confidence and the second confidence; and

a determining module (540), configured to determine, based on a time-varying relationship of the plurality of fusion distance relationship values, whether the target vehicle has a lane change trend.

11. The apparatus according to claim 10, wherein the obtaining module is configured to:

obtain, based on a high-definition map, a center line point set of the lane in which the current vehicle is located, wherein the center line point set comprises coordinates of a plurality of sampling points on the center line of the lane in which the current vehicle is located in a world coordinate system; and

obtain, based on the laser point cloud data and the center line point set, the first distance relationship value between the center line of the lane in which the current vehicle is located and the target vehicle.

12. The apparatus according to claim 11, wherein the obtaining module is configured to:

obtain, based on the laser point cloud data, first coordinates of the target vehicle in a self-vehicle coordinate system of the current vehicle;

convert the first coordinates into second coordinates of the target vehicle in the world coordinate system;

use a minimum distance between the coordinates of the sampling points comprised in the center line point set in the world coordinate system and the second coordinates as a first distance between the center line of the lane in which the current vehicle is located and the target vehicle; and
obtain a width of the lane in which the current vehicle is located, calculate a first ratio of the first distance to the width of the lane line in which the current vehicle is located, and use the first ratio as the first distance relationship value between the center line of the lane in which the current vehicle is located and the target vehicle.

13. The apparatus according to any one of claims 10 to 12, wherein the obtaining module is configured to:

calculate, in an image coordinate system of the scene image, a vertical distance between the target vehicle and the center line of the lane in which the current vehicle is located;
calculate a width of the lane in which the current vehicle is located in the image coordinate system of the scene image; and
calculate a second ratio of the vertical distance to the width of the lane in which the current vehicle is located in the image coordinate system of the scene image, and use the second ratio as the second distance relationship value between the center line of the lane in which the current vehicle is located and the target vehicle.

14. A computer-readable storage medium, wherein the storage medium stores at least one instruction, and the instruction is loaded and executed by a processor to implement an operation performed in the method for recognizing the vehicle lane change trend according to any one of claims 1 to 9.

**Patentansprüche**

1. Verfahren zum Erkennen einer Spurwechseltendenz eines Fahrzeugs, wobei das Verfahren Folgendes umfasst:

Erlangen einer Vielzahl von erlangten ersten Abstandsbeziehungswerten und einer Vielzahl von erlangten zweiten Abstandsbeziehungswerten in einer Vielzahl von aufeinanderfolgenden Detektionszeiträumen, wobei jeder erste Abstandsbeziehungswert basierend auf einem jeweiligen Detektionszeitraum der Vielzahl von aufeinanderfolgenden Detektionszeiträumen wie folgt erlangt wird:

Erlangen (201) von Laserpunktwolkendaten eines detektierten Zielfahrzeugs, wobei das Zielfahrzeug ein Fahrzeug ist, das in einer Szene um das aktuelle Fahrzeug herum fährt;
Erlangen (202), basierend auf den Laserpunktwolkendaten, eines ersten Abstandsbeziehungswertes zwischen einer Mittellinie einer Spur, auf der sich das aktuelle Fahrzeug befindet, und dem Zielfahrzeug;
wobei jeder zweite Abstandsbeziehungswert basierend auf einem jeweiligen Detektionszeitraum der Vielzahl von aufeinanderfolgenden Detektionszeiträumen wie folgt erlangt wird:

Erlangen eines Szenenbildes (203), das das Zielfahrzeug umfasst; Erlangen (204), basierend auf dem Szenenbild, eines zweiten Abstandsbeziehungswertes zwischen der Mittellinie der Spur, auf der sich das aktuelle Fahrzeug befindet, und dem Zielfahrzeug; Berechnen (205) einer ersten Konfidenz der Vielzahl von erlangten ersten Abstandsbeziehungswerten und einer zweiten Konfidenz der Vielzahl von erlangten zweiten Abstandsbeziehungswerten;
Berechnen (206) einer Vielzahl von Fusionsabstandsbeziehungswerten der Vielzahl von ersten Abstandsbeziehungswerten und der Vielzahl von zweiten Abstandsbeziehungswerten basierend auf der ersten Konfidenz und der zweiten Konfidenz; und
Bestimmen (207), basierend auf einer zeitlich variierenden Beziehung der Vielzahl von Fusionsabstandsbeziehungswerten, ob das Zielfahrzeug eine Spurwechseltendenz aufweist.

2. Verfahren nach Anspruch 1, wobei das Erlangen, basierend auf den Laserpunktwolkendaten, eines ersten Abstandsbeziehungswertes zwischen einer Mittellinie einer Spur, auf der sich das aktuelle Fahrzeug befindet, und dem Zielfahrzeug Folgendes umfasst:

Erlangen, basierend auf einer hochauflösenden Karte, eines Mittellinienpunktsatzes der Spur, auf der sich das aktuelle Fahrzeug befindet, wobei der Mittellinienpunktsatz Koordinaten einer Vielzahl von Abtastpunkten auf der Mittellinie der Spur, auf der sich das aktuelle Fahrzeug befindet, in einem Weltkoordinatensystem umfasst; und
Erlangen, basierend auf den Laserpunktwolkendaten und dem Mittellinienpunktsatz, des ersten Abstandsbeziehungswertes zwischen der Mittellinie der Spur, auf der sich das aktuelle Fahrzeug befindet, und dem Zielfahrzeug.

**3.** Verfahren nach Anspruch 2, wobei das Erlangen, basierend auf den Laserpunktwolkendaten und dem Mittellinienpunktsatz, des ersten Abstandsbeziehungswertes zwischen der Mittellinie der Spur, auf der sich das aktuelle Fahrzeug befindet, und dem Zielfahrzeug Folgendes umfasst:

Erlangen, basierend auf den Laserpunktwolkendaten, von ersten Koordinaten des Zielfahrzeugs in einem Eigenfahrzeug-Koordinatensystem des aktuellen Fahrzeugs;

Umwandeln der ersten Koordinaten in zweite Koordinaten des Zielfahrzeugs in dem Weltkoordinatensystem;

Verwenden eines Mindestabstands zwischen den Koordinaten der in dem Mittellinienpunktsatz in dem Weltkoordinatensystem enthaltenen Abtastpunkte und den zweiten Koordinaten als ersten Abstand zwischen der Mittellinie der Spur, auf der sich das aktuelle Fahrzeug befindet, und dem Zielfahrzeug; und

Erlangen einer Breite der Spur, auf der sich das aktuelle Fahrzeug befindet, Berechnen eines ersten Verhältnisses des ersten Abstands zu der Breite der Spurlinie, auf der sich das aktuelle Fahrzeug befindet, und Verwenden des ersten Verhältnisses als den ersten Abstandsbeziehungswert zwischen der Mittellinie der Spur, auf der sich das aktuelle Fahrzeug befindet, und dem Zielfahrzeug.

**4.** Verfahren nach einem der Ansprüche 1 bis 3, wobei das Erlangen, basierend auf dem Szenenbild, eines zweiten Abstandsbeziehungswertes zwischen der Mittellinie der Spur, auf der sich das aktuelle Fahrzeug befindet, und dem Zielfahrzeug Folgendes umfasst:

Berechnen, in einem Bildkoordinatensystem des Szenenbildes, eines vertikalen Abstands zwischen dem Zielfahrzeug und der Mittellinie der Spur, auf der sich das aktuelle Fahrzeug befindet;

Berechnen einer Breite der Spur, auf der sich das aktuelle Fahrzeug befindet, in dem Bildkoordinatensystem des Szenenbildes; und

Berechnen eines zweiten Verhältnisses der Breite der Spur, auf der sich das aktuelle Fahrzeug befindet, in dem Bildkoordinatensystem zu dem vertikalen Abstand und Verwenden des zweiten Verhältnisses als den zweiten Abstandsbeziehungswert zwischen der Mittellinie der Spur, auf der sich das aktuelle Fahrzeug befindet, und dem Zielfahrzeug.

**5.** Verfahren nach einem der Ansprüche 1 bis 4, wobei das Berechnen einer ersten Konfidenz einer Vielzahl von erlangten ersten Abstandsbeziehungswerten und einer zweiten Konfidenz einer Vielzahl von erlangten zweiten Abstandsbeziehungswerten Folgendes umfasst:
Berechnen, basierend auf einem idealen Spurwechselmodell und einem idealen Spurhaltemodell, der ersten Konfidenz der Vielzahl von erlangten ersten Abstandsbeziehungswerten und der zweiten Konfidenz der Vielzahl von erlangten zweiten Abstandsbeziehungswerten, wobei das ideale Spurwechselmodell verwendet wird, um eine zeitlich variierende Beziehung eines Abstandsbeziehungswertes zwischen einem anderen Fahrzeug in der Szene um das aktuelle Fahrzeug herum und der Mittellinie der Spur, auf der sich das aktuelle Fahrzeug befindet, darzustellen, wenn das andere Fahrzeug eine Spur wechselt; und wobei das ideale Spurhaltemodell verwendet wird, um eine zeitlich variierende Beziehung eines Abstandsbeziehungswertes zwischen dem anderen Fahrzeug und der Mittellinie der Spur, auf der sich das aktuelle Fahrzeug befindet, darzustellen, wenn sich das andere Fahrzeug entlang der Spur bewegt.

**6.** Verfahren nach Anspruch 5, wobei das Berechnen, basierend auf einem idealen Spurwechselmodell und einem idealen Spurhaltemodell, der ersten Konfidenz der Vielzahl von erlangten ersten Abstandsbeziehungswerten und der zweiten Konfidenz der Vielzahl von erlangten zweiten Abstandsbeziehungswerten Folgendes umfasst:

Berechnen eines Wertes jedes unbekannten Parameters in dem idealen Spurwechselmodell basierend auf der Vielzahl von erlangten ersten Abstandsbeziehungswerten, um ein erstes verfügbares Spurwechselmodell zu erlangen;

Berechnen eines Wertes jedes unbekannten Parameters in dem idealen Spurhaltemodell basierend auf der Vielzahl von erlangten ersten Abstandsbeziehungswerten, um ein erstes verfügbares Spurhaltemodell zu erlangen;

Berechnen eines ersten Anpassungsgrades der Vielzahl von erlangten ersten Abstandsbeziehungswerten an das erste verfügbare Spurwechselmodell und eines zweiten Anpassungsgrades der Vielzahl von erlangten ersten Abstandsbeziehungswerten an das erste verfügbare Spurhaltemodell;

Erlangen der ersten Konfidenz der Vielzahl von erlangten ersten Abstandsbeziehungswerten basierend auf dem ersten Anpassungsgrad und dem zweiten Anpassungsgrad;

Berechnen eines Wertes jedes unbekannten Parameters in dem idealen Spurwechselmodell basierend auf der Vielzahl von erlangten zweiten Abstandsbeziehungswerten, um ein zweites verfügbares Spurwechselmodell zu erlangen;

Berechnen eines Wertes jedes unbekannten Parameters in dem idealen Spurhaltemodell basierend auf der Vielzahl von erlangten zweiten Abstandsbeziehungswerten, um ein zweites verfügbares Spurhaltemodell zu erlangen;

Berechnen eines dritten Anpassungsgrades der Vielzahl von erlangten zweiten Abstandsbeziehungswerten an das zweite verfügbare Spurwechselmodell und eines vierten Anpassungsgrades der Vielzahl von erlangten zweiten Abstandsbeziehungswerten an das zweite verfügbare Spurhaltemodell; und

Erlangen der zweiten Konfidenz der Vielzahl von erlangten zweiten Abstandsbeziehungswerten basierend auf dem dritten Anpassungsgrad und dem vierten Anpassungsgrad.

7. Verfahren nach Anspruch 6, wobei das Erlangen der ersten Konfidenz der Vielzahl von erlangten ersten Abstandsbeziehungswerten basierend auf dem ersten Anpassungsgrad und dem zweiten Anpassungsgrad Folgendes umfasst:

Erlangen eines Kehrwertes eines kleineren Wertes zwischen dem ersten Anpassungsgrad und dem zweiten Anpassungsgrad und Verwenden des Kehrwertes als die erste Konfidenz der Vielzahl von erlangten ersten Abstandsbeziehungswerten; und

wobei das Erlangen der zweiten Konfidenz der Vielzahl von erlangten zweiten Abstandsbeziehungswerten basierend auf dem dritten Anpassungsgrad und dem vierten Anpassungsgrad Folgendes umfasst:

Erlangen eines Kehrwertes eines kleineren Wertes zwischen dem dritten Anpassungsgrad und dem vierten Anpassungsgrad und Verwenden des Kehrwertes als die zweite Konfidenz der Vielzahl von erlangten zweiten Abstandsbeziehungswerten.

8. Verfahren nach einem der Ansprüche 1 bis 7, wobei das Erlangen, basierend auf den Laserpunktwolkendaten, eines ersten Abstandsbeziehungswertes zwischen einer Mittellinie einer Spur, auf der sich das aktuelle Fahrzeug befindet, und dem Zielfahrzeug Folgendes umfasst:

Erlangen, basierend auf einem Detektionszeitraum und den Laserpunktwolkendaten, des ersten Abstandsbeziehungswertes zwischen der Mittellinie der Spur, auf der sich das aktuelle Fahrzeug befindet, und dem Zielfahrzeug;

wobei das Erlangen, basierend auf dem Szenenbild, eines zweiten Abstandsbeziehungswertes zwischen der Mittellinie der Spur, auf der sich das aktuelle Fahrzeug befindet, und dem Zielfahrzeug Folgendes umfasst:

Erlangen, basierend auf dem Detektionszeitraum und dem Szenenbild, des zweiten Abstandsbeziehungswertes zwischen der Mittellinie der Spur, auf der sich das aktuelle Fahrzeug befindet, und dem Zielfahrzeug; und

wobei das Berechnen einer Vielzahl von Fusionsabstandsbeziehungswerten der Vielzahl von ersten Abstandsbeziehungswerten und der Vielzahl von zweiten Abstandsbeziehungswerten basierend auf der ersten Konfidenz und der zweiten Konfidenz Folgendes umfasst:

Berechnen, basierend auf der ersten Konfidenz und der zweiten Konfidenz, einer ersten Gewichtung, die der Vielzahl von ersten Abstandsbeziehungswerten entspricht, und einer zweiten Gewichtung, die der Vielzahl von zweiten Abstandsbeziehungswerten entspricht;

Erlangen, aus der Vielzahl von ersten Abstandsbeziehungswerten und der Vielzahl von zweiten Abstandsbeziehungswerten, eines ersten Zielabstandsbeziehungswertes und eines zweiten Zielabstandsbeziehungswertes, die in einem gleichen Detektionszeitraum erlangt wurden; und

Addieren eines Produkts aus dem ersten Zielabstandsbeziehungswert und der ersten Gewichtung zu einem Produkt aus dem zweiten Zielabstandsbeziehungswert und der zweiten Gewichtung, um einen Fusionsabstandsbeziehungswert zu erlangen, der dem Detektionszeitraum entspricht, zu dem der erste Zielabstandsbeziehungswert und der zweite Zielbeziehungswert gehören.

9. Verfahren nach einem der Ansprüche 1 bis 8, wobei das Bestimmen, basierend auf der Vielzahl von Fusionsabstandsbeziehungswerten, ob das Zielfahrzeug eine Spurwechseltendenz aufweist, Folgendes umfasst:

Berechnen eines Wertes jedes unbekannten Parameters in dem idealen Spurwechselmodell basierend auf der Vielzahl von Fusionsabstandsbeziehungswerten, um ein drittes verfügbares Spurwechselmodell zu erlangen;

Berechnen eines fünften Anpassungsgrades der Vielzahl von Fusionsabstandsbeziehungswerten an das dritte verfügbare Spurwechselmodell; und

wenn der fünfte Anpassungsgrad größer als ein zuvor festgelegter Anpassungsgradschwellenwert ist, Bestimmen, dass das Zielfahrzeug eine Spurwechseltendenz aufweist.

**10.** Einrichtung zum Erkennen einer Spurwechseltendenz eines Fahrzeugs, wobei die Einrichtung Folgendes umfasst: ein Erlangungsmodul (510), das zu Folgendem konfiguriert ist:

Erlangen, in einer Vielzahl von aufeinanderfolgenden Detektionszeiträumen, einer Vielzahl von erlangten ersten Abstandsbeziehungswerten und einer Vielzahl von erlangten zweiten Abstandsbeziehungswerten, wobei jeder erste Abstandsbeziehungswert basierend auf einem jeweiligen Detektionszeitraum der Vielzahl von aufeinanderfolgenden Detektionszeiträumen durch Folgendes erlangt wird:

Erlangen von Laserpunktwolkendaten eines detektierten Zielfahrzeugs, wobei das Zielfahrzeug ein Fahrzeug ist, das in einer Szene um das aktuelle Fahrzeug herum fährt; Erlangen, basierend auf den Laserpunktwolkendaten, eines ersten Abstandsbeziehungswertes zwischen einer Mittellinie einer Spur, auf der sich das aktuelle Fahrzeug befindet, und dem Zielfahrzeug, und wobei jeder zweite Abstandsbeziehungswert basierend auf einem jeweiligen Detektionszeitraum der Vielzahl von aufeinanderfolgenden Detektionszeiträumen durch Folgendes erlangt wird:

Erlangen eines Szenenbildes, das das Zielfahrzeug umfasst; und Erlangen, basierend auf dem Szenenbild, eines zweiten Abstandsbeziehungswertes zwischen der Mittellinie der Spur, auf der sich das aktuelle Fahrzeug befindet, und dem Zielfahrzeug; ein Berechnungsmodul (520), das dazu konfiguriert ist, eine erste Konfidenz einer Vielzahl der erlangten ersten Abstandsbeziehungswerte und einer zweiten Konfidenz der Vielzahl von erlangten zweiten Abstandsbeziehungswerten zu berechnen; ein Fusionsmodul (530), das dazu konfiguriert ist, eine Vielzahl von Fusionsabstandsbeziehungswerten der Vielzahl von ersten Abstandsbeziehungswerten und der Vielzahl von zweiten Abstandsbeziehungswerten basierend auf der ersten Konfidenz und der zweiten Konfidenz zu berechnen; und ein Bestimmungsmodul (540), das dazu konfiguriert ist, basierend auf einer zeitlich variierenden Beziehung der Vielzahl von Fusionsabstandsbeziehungswerten zu bestimmen, ob das Zielfahrzeug eine Spurwechseltendenz aufweist.

**11.** Einrichtung nach Anspruch 10, wobei das Erlangungsmodul zu Folgendem konfiguriert ist:

Erlangen, basierend auf einer hochauflösenden Karte, eines Mittellinienpunktsatzes der Spur, auf der sich das aktuelle Fahrzeug befindet, wobei der Mittellinienpunktsatz Koordinaten einer Vielzahl von Abtastpunkten auf der Mittellinie der Spur, auf der sich das aktuelle Fahrzeug befindet, in einem Weltkoordinatensystem umfasst; und Erlangen, basierend auf den Laserpunktwolkendaten und dem Mittellinienpunktsatz, des ersten Abstandsbeziehungswertes zwischen der Mittellinie der Spur, auf der sich das aktuelle Fahrzeug befindet, und dem Zielfahrzeug.

**12.** Einrichtung nach Anspruch 11, wobei das Erlangungsmodul zu Folgendem konfiguriert ist:

Erlangen, basierend auf den Laserpunktwolkendaten, von ersten Koordinaten des Zielfahrzeugs in einem Eigenfahrzeug-Koordinatensystem des aktuellen Fahrzeugs; Umwandeln der ersten Koordinaten in zweite Koordinaten des Zielfahrzeugs in dem Weltkoordinatensystem; Verwenden eines Mindestabstands zwischen den Koordinaten der in dem Mittellinienpunktsatz in dem Weltkoordinatensystem enthaltenen Abtastpunkte und den zweiten Koordinaten als ersten Abstand zwischen der Mittellinie der Spur, auf der sich das aktuelle Fahrzeug befindet, und dem Zielfahrzeug; und Erlangen einer Breite der Spur, auf der sich das aktuelle Fahrzeug befindet, Berechnen eines ersten Verhältnisses des ersten Abstands zu der Breite der Spurlinie, auf der sich das aktuelle Fahrzeug befindet, und Verwenden des ersten Verhältnisses als den ersten Abstandsbeziehungswert zwischen der Mittellinie der Spur, auf der sich das aktuelle Fahrzeug befindet, und dem Zielfahrzeug.

**13.** Einrichtung nach einem der Ansprüche 10 bis 12, wobei das Erlangungsmodul zu Folgendem konfiguriert ist:

Berechnen, in einem Bildkoordinatensystem des Szenenbildes, eines vertikalen Abstands zwischen dem Zielfahrzeug und der Mittellinie der Fahrspur, auf der sich das aktuelle Fahrzeug befindet; Berechnen einer Breite der Spur, auf der sich das aktuelle Fahrzeug befindet, in dem Bildkoordinatensystem des Szenenbildes; und

Berechnen eines zweiten Verhältnisses des vertikalen Abstands zu der Breite der Spur, auf der sich das aktuelle Fahrzeug befindet, in dem Bildkoordinatensystem des Szenenbildes und Verwenden des zweiten Verhältnisses als den zweiten Abstandsbeziehungswert zwischen der Mittellinie der Spur, auf der sich das aktuelle Fahrzeug befindet, und dem Zielfahrzeug.

14. Computerlesbares Speichermedium, wobei das Speichermedium mindestens eine Anweisung speichert und die Anweisung durch einen Prozessor geladen und ausgeführt wird, um einen Vorgang umzusetzen, der in dem Verfahren zum Erkennen der Spurwechseltendenz eines Fahrzeugs gemäß einem der Ansprüche 1 bis 9 durchgeführt wird.

## Revendications

1. Procédé de reconnaissance d'une tendance de changement de voie d'un véhicule, le procédé comprenant :

l'obtention, au cours d'une pluralité de périodes de détection consécutives, d'une pluralité de premières valeurs de relation de distance obtenues et d'une pluralité de secondes valeurs de relation de distance obtenues, dans lequel chaque première valeur de relation de distance est obtenue, sur la base d'une période de détection respective de ladite pluralité de périodes de détection consécutives, par :

l'obtention (201) de données de nuage de points laser d'un véhicule cible détecté, dans lequel le véhicule cible est un véhicule se déplaçant dans une scène autour du véhicule actuel ; l'obtention (202), sur la base des données de nuage de points laser, d'une première valeur de relation de distance entre une ligne centrale d'une voie dans laquelle se trouve le véhicule actuel et le véhicule cible ;

dans lequel chaque seconde valeur de relation de distance est obtenue, sur la base d'une période de détection respective de ladite pluralité de périodes de détection consécutives, par :

l'obtention d'une image de scène (203) comprenant le véhicule cible ;
l'obtention (204), sur la base de l'image de scène, d'une seconde valeur de relation de distance entre la ligne centrale de la voie dans laquelle se trouve le véhicule actuel et le véhicule cible ;
le calcul (205) d'une première confiance de ladite pluralité de premières valeurs de relation de distance obtenues et d'une seconde confiance de ladite pluralité de secondes valeurs de relation de distance obtenues ;
le calcul (206) d'une pluralité de valeurs de relation de distance de fusion de la pluralité de premières valeurs de relation de distance et de la pluralité de secondes valeurs de relation de distance sur la base de la première confiance et de la seconde confiance ; et
la détermination (207), sur la base d'une relation variable dans le temps de la pluralité de valeurs de relation de distance de fusion, du fait de savoir si le véhicule cible a une tendance de changement de voie.

2. Procédé selon la revendication 1, dans lequel l'obtention, sur la base des données de nuage de points laser, d'une première valeur de relation de distance entre une ligne centrale d'une voie dans laquelle se trouve le véhicule actuel et le véhicule cible comprend :

l'obtention, sur la base d'une carte haute définition, d'un ensemble de points de ligne centrale de la voie dans laquelle se trouve le véhicule actuel, dans lequel l'ensemble de points de ligne centrale comprend des coordonnées d'une pluralité de points d'échantillonnage sur la ligne centrale de la voie dans laquelle se trouve le véhicule actuel dans un système de coordonnées mondial ; et
l'obtention, sur la base des données de nuage de points laser et de l'ensemble de points de ligne centrale, de la première valeur de relation de distance entre la ligne centrale de la voie dans laquelle se trouve le véhicule actuel et le véhicule cible.

3. Procédé selon la revendication 2, dans lequel l'obtention, sur la base des données de nuage de points laser et de l'ensemble de points de ligne centrale, de la première valeur de relation de distance entre la ligne centrale de la voie dans laquelle se trouve le véhicule actuel et le véhicule cible comprend :

l'obtention, sur la base des données de nuage de points laser, de premières coordonnées du véhicule cible dans un système de coordonnées propre au véhicule du véhicule actuel ;

la conversion des premières coordonnées en secondes coordonnées du véhicule cible dans le système de coordonnées mondial ;

l'utilisation d'une distance minimale entre les coordonnées des points d'échantillonnage compris dans l'ensemble de points de ligne centrale dans le système de coordonnées mondial et les secondes coordonnées en tant que première distance entre la ligne centrale de la voie dans laquelle se trouve le véhicule actuel et le véhicule cible ; et

l'obtention d'une largeur de la voie dans laquelle se trouve le véhicule actuel, le calcul d'un premier rapport entre la première distance et la largeur de la ligne de voie dans laquelle se trouve le véhicule actuel, et l'utilisation du premier rapport comme étant la première valeur de relation de distance entre la ligne centrale de la voie dans laquelle se trouve le véhicule actuel et le véhicule cible.

4. Procédé selon l'une quelconque des revendications 1 à 3, dans lequel l'obtention, sur la base de l'image de scène, d'une seconde valeur de relation de distance entre la ligne centrale de la voie dans laquelle se trouve le véhicule actuel et le véhicule cible comprend :

le calcul, dans un système de coordonnées d'image de l'image de scène, d'une distance verticale entre le véhicule cible et la ligne centrale de la voie dans laquelle se trouve le véhicule actuel ;

le calcul d'une largeur de la voie dans laquelle se trouve le véhicule actuel dans le système de coordonnées d'image de l'image de scène ; et

le calcul d'un second rapport entre la largeur de la voie dans laquelle se trouve le véhicule actuel dans le système de coordonnées d'image et la distance verticale, et l'utilisation du second rapport comme étant la seconde valeur de relation de distance entre la ligne centrale de la voie dans laquelle se trouve le véhicule actuel et le véhicule cible.

5. Procédé selon l'une quelconque des revendications 1 à 4, dans lequel le calcul de la première confiance d'une pluralité de premières valeurs de relation de distance obtenues et de la seconde confiance d'une pluralité de secondes valeurs de relation de distance obtenues comprend :

le calcul, sur la base d'un modèle de changement de voie idéal et d'un modèle de maintien de voie idéal, de la première confiance de la pluralité de premières valeurs de relation de distance obtenues et de la seconde confiance de la pluralité de secondes valeurs de relation de distance obtenues, dans lequel le modèle de changement de voie idéal est utilisé pour représenter une relation variable dans le temps d'une valeur de relation de distance entre un autre véhicule dans la scène autour du véhicule actuel et la ligne centrale de la voie dans laquelle se trouve le véhicule actuel lorsque l'autre véhicule change de voie ; et le modèle de maintien de voie idéal est utilisé pour représenter une relation variable dans le temps d'une valeur de relation de distance entre l'autre véhicule et la ligne centrale de la voie dans laquelle se trouve le véhicule actuel lorsque l'autre véhicule se déplace le long de la voie.

6. Procédé selon la revendication 5, dans lequel le calcul, sur la base d'un modèle de changement de voie idéal et d'un modèle de maintien de voie idéal, de la première confiance de la pluralité de premières valeurs de relation de distance obtenues et de la seconde confiance de la pluralité de secondes valeurs de relation de distance obtenues comprend :

le calcul d'une valeur de chaque paramètre inconnu dans le modèle de changement de voie idéal sur la base de la pluralité de premières valeurs de relation de distance obtenues, pour obtenir un premier modèle de changement de voie disponible ;

le calcul d'une valeur de chaque paramètre inconnu dans le modèle de maintien de voie idéal sur la base de la pluralité de premières valeurs de relation de distance obtenues, pour obtenir un premier modèle de maintien de voie disponible ;

le calcul d'un premier degré d'ajustement de la pluralité de premières valeurs de relation de distance obtenues au premier modèle de changement de voie disponible et d'un deuxième degré d'ajustement de la pluralité de premières valeurs de relation de distance obtenues au premier modèle de maintien de voie disponible ;

l'obtention de la première confiance de la pluralité de premières valeurs de relation de distance obtenues sur la base du premier degré d'ajustement et du deuxième degré d'ajustement ;

le calcul d'une valeur de chaque paramètre inconnu dans le modèle de changement de voie idéal sur la base de la pluralité de secondes valeurs de relation de distance obtenues, pour obtenir un deuxième modèle de changement de voie disponible ;

le calcul d'une valeur de chaque paramètre inconnu dans le modèle de maintien de voie idéal sur la base de la pluralité de secondes valeurs de relation de distance obtenues, pour obtenir un second modèle de maintien de voie disponible ;

le calcul d'un troisième degré d'ajustement de la pluralité de secondes valeurs de relation de distance obtenues au deuxième modèle de changement de voie disponible et d'un quatrième degré d'ajustement de la pluralité de secondes valeurs de relation de distance obtenues au second modèle de maintien de voie disponible ; et l'obtention de la seconde confiance de la pluralité de secondes valeurs de relation de distance obtenues sur la base du troisième degré d'ajustement et du quatrième degré d'ajustement.

**7.** Procédé selon la revendication 6, dans lequel l'obtention de la première confiance de la pluralité de premières valeurs de relation de distance obtenues sur la base du premier degré d'ajustement et du deuxième degré d'ajustement comprend :

l'obtention d'une réciproque d'une valeur plus petite entre le premier degré d'ajustement et le deuxième degré d'ajustement, et l'utilisation de la réciproque comme étant la première confiance de la pluralité de premières valeurs de relation de distance obtenues ; et
l'obtention de la seconde confiance de la pluralité de secondes valeurs de relation de distance obtenues sur la base du troisième degré d'ajustement et du quatrième degré d'ajustement comprend : l'obtention d'une réciproque d'une valeur plus petite entre le troisième degré d'ajustement et le quatrième degré d'ajustement, et l'utilisation de la réciproque comme étant la seconde confiance de la pluralité de secondes valeurs de relation de distance obtenues.

**8.** Procédé selon l'une quelconque des revendications 1 à 7, dans lequel l'obtention, sur la base des données de nuage de points laser, d'une première valeur de relation de distance entre une ligne centrale d'une voie dans laquelle se trouve le véhicule actuel et le véhicule cible comprend :

l'obtention, sur la base d'une période de détection et des données de nuage de points laser, de la première valeur de relation de distance entre la ligne centrale de la voie dans laquelle se trouve le véhicule actuel et le véhicule cible ;
l'obtention, sur la base de l'image de scène, d'une seconde valeur de relation de distance entre la ligne centrale de la voie dans laquelle se trouve le véhicule actuel et le véhicule cible comprend :

l'obtention, sur la base de la période de détection et de l'image de scène, de la seconde valeur de relation de distance entre la ligne centrale de la voie dans laquelle se trouve le véhicule actuel et le véhicule cible ; et
le calcul d'une pluralité de valeurs de relation de distance de fusion de la pluralité de premières valeurs de relation de distance et de la pluralité de secondes valeurs de relation de distance sur la base de la première confiance et de la seconde confiance comprend :

le calcul, sur la base de la première confiance et de la seconde confiance, d'un premier poids correspondant à la pluralité de premières valeurs de relation de distance et d'un second poids correspondant à la pluralité de secondes valeurs de relation de distance ;
l'obtention, à partir de la pluralité de premières valeurs de relation de distance et de la pluralité de secondes valeurs de relation de distance, d'une première valeur de relation de distance cible et d'une seconde valeur de relation de distance cible qui sont obtenues au cours d'une même période de détection ; et
l'addition d'un produit de la première valeur de relation de distance cible et du premier poids à un produit de la seconde valeur de relation de distance cible et du second poids, pour obtenir une valeur de relation de distance de fusion correspondant à la période de détection à laquelle la première valeur de relation de distance cible et la seconde valeur de relation cible appartiennent.

**9.** Procédé selon l'une quelconque des revendications 1 à 8, dans lequel la détermination, sur la base de la pluralité de valeurs de relation de distance de fusion, du fait de savoir si le véhicule cible a une tendance de changement de voie comprend :

le calcul d'une valeur de chaque paramètre inconnu dans le modèle de changement de voie idéal sur la base de la pluralité de valeurs de relation de distance de fusion, pour obtenir un troisième modèle de changement de voie disponible ;
le calcul d'un cinquième degré d'ajustement de la pluralité de valeurs de relation de distance de fusion au troisième modèle de changement de voie disponible ; et
si le cinquième degré d'ajustement est supérieur à un seuil de degré d'ajustement prédéfini, la détermination du fait que le véhicule cible a une tendance de changement de voie.

**10.** Appareil de reconnaissance d'une tendance de changement de voie d'un véhicule, dans lequel l'appareil comprend :
un module d'obtention (510), configuré pour :
obtenir, au cours d'une pluralité de périodes de détection consécutives, une pluralité de premières valeurs de relation de distance obtenues et une pluralité de secondes valeurs de relation de distance obtenues, dans lequel chaque première valeur de relation de distance est obtenue, sur la base d'une période de détection respective de ladite pluralité de périodes de détection consécutives, par :

l'obtention de données de nuage de points laser d'un véhicule cible détecté, dans lequel le véhicule cible est un véhicule se déplaçant dans une scène autour du véhicule actuel ; l'obtention, sur la base des données de nuage de points laser, d'une première valeur de relation de distance entre une ligne centrale d'une voie dans laquelle se trouve le véhicule actuel et le véhicule cible, et
dans lequel chaque seconde valeur de relation de distance est obtenue, sur la base d'une période de détection respective de ladite pluralité de périodes de détection consécutives :

l'obtention d'une image de scène comprenant le véhicule cible ; et l'obtention, sur la base de l'image de scène, d'une seconde valeur de relation de distance entre la ligne centrale de la voie dans laquelle se trouve le véhicule actuel et le véhicule cible ;
un module de calcul (520), configuré pour calculer une première confiance d'une pluralité desdites premières valeurs de relation de distance obtenues et une seconde confiance de ladite pluralité de secondes valeurs de relation de distance obtenues ; un module de fusion (530), configuré pour calculer une pluralité de valeurs de relation de distance de fusion de la pluralité de premières valeurs de relation de distance et de la pluralité de secondes valeurs de relation de distance sur la base de la première confiance et de la seconde confiance ; et
un module de détermination (540), configuré pour déterminer, sur la base d'une relation variable dans le temps de la pluralité de valeurs de relation de distance de fusion, le fait de savoir si le véhicule cible a une tendance de changement de voie.

**11.** Appareil selon la revendication 10, dans lequel le module d'obtention est configuré pour :

obtenir, sur la base d'une carte haute définition, un ensemble de points de ligne centrale de la voie dans laquelle se trouve le véhicule actuel, dans lequel l'ensemble de points de ligne centrale comprend des coordonnées d'une pluralité de points d'échantillonnage sur la ligne centrale de la voie dans laquelle se trouve le véhicule actuel dans un système de coordonnées mondial ; et
obtenir, sur la base des données de nuage de points laser et de l'ensemble de points de ligne centrale, la première valeur de relation de distance entre la ligne centrale de la voie dans laquelle se trouve le véhicule actuel et le véhicule cible.

**12.** Appareil selon la revendication 11, dans lequel le module d'obtention est configuré pour :

obtenir, sur la base des données de nuage de points laser, des premières coordonnées du véhicule cible dans un système de coordonnées propre au véhicule du véhicule actuel ;
convertir les premières coordonnées en secondes coordonnées du véhicule cible dans le système de coordonnées mondial ;
utiliser une distance minimale entre les coordonnées des points d'échantillonnage compris dans l'ensemble de points de ligne centrale dans le système de coordonnées mondial et les secondes coordonnées en tant que première distance entre la ligne centrale de la voie dans laquelle se trouve le véhicule actuel et le véhicule cible ; et
obtenir une largeur de la voie dans laquelle se trouve le véhicule actuel, calculer un premier rapport entre la première distance et la largeur de la ligne de voie dans laquelle se trouve le véhicule actuel, et utiliser le premier rapport comme étant la première valeur de relation de distance entre la ligne centrale de la voie dans laquelle se trouve le véhicule actuel et le véhicule cible.

**13.** Appareil selon l'une quelconque des revendications 10 à 12, dans lequel le module d'obtention est configuré pour :

calculer, dans un système de coordonnées d'image de l'image de scène, une distance verticale entre le véhicule cible et la ligne centrale de la voie dans laquelle se trouve le véhicule actuel ;
calculer une largeur de la voie dans laquelle se trouve le véhicule actuel dans le système de coordonnées d'image de l'image de scène ; et
calculer un second rapport entre la distance verticale et la largeur de la voie dans laquelle se trouve le véhicule actuel dans le système de coordonnées d'image de l'image de scène, et utiliser le second rapport comme étant la seconde valeur de relation de distance entre la ligne centrale de la voie dans laquelle se trouve le véhicule actuel et le véhicule cible.

14. Support de stockage lisible par ordinateur, dans lequel le support de stockage stocke au moins une instruction, et l'instruction est chargée et exécutée par un processeur pour mettre en œuvre une opération réalisée dans le procédé de reconnaissance de la tendance de changement de voie d'un véhicule selon l'une quelconque des revendications 1 à 9.

Device for recognizing a
vehicle lane change trend ⌐ 101

Processor

⌐ 100

Memory ⌐ 102

FIG. 1

```
┌──────────────────────────────────────────────────────────────────┐        201
│                                                                    │   ⌐
│         Obtain laser point cloud data of a detected target vehicle │
│                                                                    │
└──────────────────────────────────────────────────────────────────┘
                                 │
                                 ▼
┌──────────────────────────────────────────────────────────────────┐        202
│  Obtain, based on the laser point cloud data, a first distance     │   ⌐
│  relationship value between a center line of a lane in which a      │
│  current vehicle is located and the target vehicle                 │
└──────────────────────────────────────────────────────────────────┘
                                 │
                                 ▼
┌──────────────────────────────────────────────────────────────────┐        203
│                                                                    │   ⌐
│         Obtain a scene image including the target vehicle           │
│                                                                    │
└──────────────────────────────────────────────────────────────────┘
                                 │
                                 ▼
┌──────────────────────────────────────────────────────────────────┐        204
│  Obtain, based on the scene image, a second distance relationship  │   ⌐
│  value between the center line of the lane in which the current     │
│  vehicle is located and the target vehicle                         │
└──────────────────────────────────────────────────────────────────┘
                                 │
                                 ▼
┌──────────────────────────────────────────────────────────────────┐        205
│  Calculate first confidence of a plurality of obtained first       │   ⌐
│  distance relationship values and second confidence of a plurality │
│  of obtained second distance relationship values                   │
└──────────────────────────────────────────────────────────────────┘
                                 │
                                 ▼
┌──────────────────────────────────────────────────────────────────┐        206
│  Calculate, based on the first confidence and the second           │   ⌐
│  confidence, a plurality of fusion distance relationship values of │
│  the plurality of first distance relationship values and the       │
│  plurality of second distance relationship values                  │
└──────────────────────────────────────────────────────────────────┘
                                 │
                                 ▼
┌──────────────────────────────────────────────────────────────────┐        207
│  Determine, based on the plurality of fusion distance relationship │   ⌐
│  values, whether the target vehicle has a lane change trend        │
│                                                                    │
└──────────────────────────────────────────────────────────────────┘
```

FIG. 2

(0,0)

X

Vertex 1

Vertex 2

Bounding
box of a
target vehicle

Lane in which a
current vehicle is
located

Y

FIG. 3

(0,0)

X

Y

$A_1$

A2

$B_1$  Vertex 1

$B_2$  Vertex 2

Bounding box
of a target
vehicle

Lane in which a
current vehicle is
located

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009067675 A1

- CN 101089917 A